(19) Europäisches Patentamt
European Patent Office
Office européen des brevets

(11) EP 3 046 949 B1

(12) **EUROPÄISCHE PATENTSCHRIFT**

(45) Veröffentlichungstag und Bekanntmachung des Hinweises auf die Patenterteilung:
**26.06.2019 Patentblatt 2019/26**

(21) Anmeldenummer: **14761624.7**

(22) Anmeldetag: **08.09.2014**

(51) Int Cl.:
***C08G 69/04*** (2006.01) ***C08G 73/10*** (2006.01)
***C11D 3/00*** (2006.01) ***C08G 73/14*** (2006.01)
***C08G 69/10*** (2006.01) ***C11D 3/37*** (2006.01)

(86) Internationale Anmeldenummer:
**PCT/EP2014/069031**

(87) Internationale Veröffentlichungsnummer:
**WO 2015/036344 (19.03.2015 Gazette 2015/11)**

(54) **VERFAHREN ZUR HERSTELLUNG POLYASPARAGINSÄUREN**

METHOD FOR PRODUCING POLYASPARTIC ACIDS

PROCÉDÉ DE FABRICATION D'ACIDES POLYASPARTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.09.2013 EP 13184589**

(43) Veröffentlichungstag der Anmeldung:
**27.07.2016 Patentblatt 2016/30**

(73) Patentinhaber: **BASF SE**
**67056 Ludwigshafen am Rhein (DE)**

(72) Erfinder:
- **DETERING, Jürgen**
  **67117 Limburgerhof (DE)**
- **TÜRKOGLU, Gazi**
  **68163 Mannheim (DE)**
- **FEHRINGER, Dietrich**
  **69234 Dielheim (DE)**

(74) Vertreter: **BASF IP Association**
**BASF SE**
**G-FLP-C006**
**67056 Ludwigshafen (DE)**

(56) Entgegenhaltungen:
**EP-A1- 0 747 417** **EP-A1- 1 083 194**
**WO-A1-96/25450** **US-A- 5 457 176**

- **FOX S W ET AL: "THERMAL POLYCONDENSATION OF ALPHA-AMINO ACIDS", ANALYTICAL METHODS OF PROTEIN CHEMISTRY, XX, XX, 1. Januar 1966 (1966-01-01), Seiten 127-151, XP002008184,**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 046 949 B1

## Beschreibung

Die vorliegende Erfindung betrifft Verfahren zur Herstellung von Polyasparaginsäuren mit einem gewichtsmittleren Molekulargewicht (Mw) von 6.000 bis 15.000 g/mol. Die vorliegende Erfindung betrifft auch Polyasparaginsäuren erhältlich nach dem erfindungsgemäßen Verfahren, Zusammensetzung enthaltend die Polyasparaginsäuren, sowie deren Verwendung als Belagsinhibitoren, Dispergiermittel und als Zusatzstoff in Spülmitteln, Waschmitteln oder Reinigungsmitteln.

Durch radikalische Polymerisation erhältliche Polymere aus carboxylgruppenhaltigen Monomeren sind seit vielen Jahren wichtiger Bestandteil von phosphathaltigen und phosphatfreien maschinellen Geschirrspülmitteln. Durch ihre schmutzdispergierende und belagsinhibierende Wirkung leisten sie einen erheblichen Beitrag zur Reinigungs- und Klarspülleistung der maschinellen Geschirrspülmittel. So sorgen sie dafür, dass auf dem Spülgut keine Salzablagerungen der härtebildenden Calcium- und Magnesiumionen zurückbleiben. Häufig werden Homo- und Copolymere der Acrylsäure für diesen Zweck eingesetzt.

Solche Polymere werden auch in flüssigen und festen Waschmitteln eingesetzt. Während des Waschvorgangs unterstützen sie aktiv die Waschleistung der Tenside und verhindern durch ihre schmutzdispergierenden Eigenschaften eine Vergrauung der Wäsche. Zusätzlich wirken sie als Inkrustationsinhibitoren, d.h. sie hemmen die unerwünschte Ablagerung unlöslicher anorganischer Salze (z.B. unlösliche Carbonate und Silikate) auf das textile Gewebe.

Ferner finden solche Polymere auch in wasserführenden Systemen als Mittel zur Verhinderung mineralischer Ablagerungen wie z.B. Calcium- und Magnesiumsulfat, Magnesiumhydroxid, Calcium- und Bariumsulfat und Calciumphosphat auf Wärmeübertragungsflächen oder in Rohrleitungen Verwendung. Als wasserführende Systeme sind hier u.a. Kühl- und Kesselspeisewassersysteme und industrielle Prozesswässer zu nennen. Aber auch in der Meerwasserentsalzung durch Destillation und durch Membranverfahren wie Umkehrosmose oder Elektrodialyse werden diese Polymere als Belagsinhibitoren eingesetzt.

Ein Nachteil dieser durch radikalische Polymerisation erhältlichen Polymere aus carboxylgruppenhaltigen Monomeren ist, dass sie unter aeroben Bedingungen, wie sie z.B. in einer kommunalen Kläranlage vorherrschen, nicht biologisch abbaubar sind.

Aufgrund von steigendem Umweltbewusstsein wächst daher die Nachfrage nach biologisch abbaubaren polymeren Alternativen zu den Polycarboxylaten auf Basis von Acrylsäure. Bisher auf dem Markt verfügbare biologisch abbaubare Polymere wie beispielsweise Polyasparaginsäure oder carboxymethyliertes Inulin haben sich jedoch als kommerziell nur schwer durchsetzbar erwiesen. Die Gründe sind mannigfaltig: zu hohe Kosten aufgrund komplexer Herstellverfahren und/oder teurer Einsatzstoffe oder keine oder nur geringe Flexibilität der Polymersynthese. So erlauben die bislang praktizierten Verfahren zur Herstellung der Polyasparaginsäure im Gegensatz zu den Verfahren zur Herstellung von Polyacrylsäuren keine großen Variationen bezüglich Struktur, Molekulargewicht und Neutralisationsgrad. Die Polyasparaginsäure wird in neutralisierter Form als Natriumsalz gewonnen. Die Molekulargewichte bewegen sich je nach Herstellprozess zwischen 2000-3000 g/mol oder zwischen 5000-6000 g/mol. Eine Anpassung der Polymerstruktur oder des Molekulargewichts an spezifische anwendungstechnische Erfordernisse durch gezielte Verfahrensänderungen ist nicht oder nur sehr begrenzt möglich.

In WO 2011/001170 werden Reinigungsmittelzusammensetzungen für das maschinelle Geschirrspülen beschrieben, enthaltend Polyasparaginsäure, ein flüssiges nichtionisches Tensid und wenigstens ein festes nichtionisches Tensid, wobei die Herstellung der Polyasparaginsäure jedoch nicht beschrieben wird.

In WO 2009/095645 werden Wasch- und Reinigungsmittelzusammensetzungen beschrieben, welche nachträglich modifizierte Polyasparaginsäuren mit Polyasparaginsäure als Rückgrat als Belagsverhinderer enthalten. Die modifizierten Polyasparaginsäuren werden durch Umsetzung der Polyasparaginsäure oder des Polysuccinimids mit PO/EO-Blockcopolymeren, Polyethylenimin oder Adenosintriphosphat erhalten. Ein solches Polyasparaginsäurerückgrat ist hinsichtlich seines Molekulargewichts nicht bis nur schwerlich einstellbar.

In WO 1996/10025 wird die Herstellung von Polyasparaginsäure aus Asparaginsäure und Methansulfonsäure unter Einsatz bestimmter Basen bei niedrigen Temperaturen beschrieben, wobei eine Produktausbeute von etwa 25% erzielt wird.

In US 5,457,176 wird die Herstellung von Polyasparaginsäure aus Asparaginsäure und hohen Mengen Methansulfonsäure bei hohen Temperaturen beschrieben, wobei auch im Produkt hohe Mengen an Methansulfonsäure verbleiben. Ausbeute und Umsatzrate werden nicht beschrieben. In EP 0747417 werden Polyasparaginsäuren zur Abscheidung von Calcium und deren Herstellungsverfahren beschrieben.

In EP 1083194 beschreibt die Herstellung von Polyasparaginsäure durch Erhitzen von Asparaginsäure in der Anwesenheit von Wasser.

In WO 1996/25450 beschreibt die Herstellung von Polyasparaginsäure durch thermische Kondensation von L-Asparaginsäure unter Verwendung von Katalysatoren.

Fox et al. "Thermal polycondensation of alpha-amino acids", Analytical Methods of Protein Chemistry, 1, Januar 1966 (1966-01-01), Seiten 127-151, XP002008184 beschreibt die thermische Kondensation von alpha-Aminosäuren.

Aufgabe der vorliegenden Erfindung war es daher, ein Verfahren zur Herstellung von Polymeren zur Verfügung zu stellen, welche

(1) sich als Zusatzstoff in Reinigerzusammensetzungen, in Spülmittelzusammensetzungen wie bspw. Geschirrspülmittelzusammensetzungen, insbesondere als Zusatzstoff zu phosphatfreien Reiniger- und Spülzusammensetzungen für die maschinelle Geschirrreinigung, und als Zusatzstoff zu flüssigen und festen Waschmitteln, und zum Zwecke der Belagsinhibierung und/oder Dispergierung in wasserführenden Systemen einsetzen lassen,
(2) in ihrer Polymerstruktur und ihrem Molekulargewicht leicht variabel einstellbar sind,
(3) eine hohe Produktausbeute aufweisen, und
(4) biologisch abbaubar sind.

Diese Aufgabe wurde durch die vorliegende Erfindung gemäß der Ansprüche und der nachfolgenden Beschreibung und Beispiele gelöst.
Die vorliegende Erfindung betrifft daher Verfahren zur Herstellung von Polyasparaginsäuren mit einem gewichtsmittleren Molekulargewicht (Mw) von 6.000 bis 15.000 g/mol, umfassend folgende Schritte:

(i) Polykondensation von

(a) Asparaginsäure in Gegenwart von
(b) 1 bis 15 mol%, bevorzugt 2 bis 13 mol%, besonders bevorzugt 3 bis 10 mol% Methansulfonsäure bezogen auf die in (a) eingesetzte Menge Asparaginsäure, bei einer Temperatur von 170 °C bis 230 °C für eine Zeit von 1 Minute bis 50 Stunden;

(ii) anschließender Hydrolyse der Polykondensate unter Zugabe einer Base; und
(iii) optional Ansäuern des in (ii) erhaltenen Salzes der Polyasparaginsäure mit Mineralsäuren, bspw. Schwefelsäure oder Salzsäure.

Der optionale Schritt (iii) des Ansäuerns des Salzes der Polyasparaginsäure im erfindungsgemäßen Verfahren dient dem Erhalt der Polyasparaginsäure in Säureform und kann in dem Fachmann bekannter Art und Weise durchgeführt werden und wie hier beispielhaft dargestellt. Falls nur das Salz der Polyasparaginsäure gewünscht ist, bspw. als Zwischenstufe, kann auf den Schritt (iii) im Zusammenhang mit der vorliegenden Erfindung verzichtet werden. Wenn im Zusammenhang mit der vorliegenden Erfindung von Polyasparaginsäure die Rede ist, werden hierbei entsprechend auch ihre entsprechenden Salze umfasst, wie sie gemäß Schritt (ii) des erfindungsgemäßen Herstellverfahrens erhältlich sind bzw. erhalten werden und wie vom Fachmann erkannt.
Wie im Rahmen der vorliegenden Erfindung überraschend gefunden wurde, ist die Einstellung des gewichtsmittleren Molekulargewichts (Mw) der herzustellenden Polyasparaginsäure abhängig von der eingesetzten Menge an Methansulfonsäure und der in der Polykondensation angelegten Temperatur, wobei das Temperaturoptimum zum Erhalt von Polyasparaginsäuren mit größerem gewichtsmittlerem Molekulargewicht (≥ 6.000 g/mol, bspw. ≥ 10.000 g/mol) zwischen 170 °C und 230 °C liegt. Niedrigere oder höhere Temperaturen haben auch beim Einsatz größerer Mengen an Katalysator (Methansulfonsäure) niedrigere gewichtsmittlere Molekulargewichte und/oder eine geringere Produktausbeute zur Folge. Bei höheren Temperaturen besteht außerdem die Gefahr einer zunehmenden thermischen Zersetzung der Methansulfonsäure mit negativen Auswirkungen auf Ausbeute, Umsetzungsgrad und Molekulargewichsteinstellung. Der Einsatz zu großer Mengen an Methansulfonsäure hat zudem den generellen Nachteil, dass dann relevante Mengen an Methansulfonsäure im Produkt verbleiben, welche wiederum die Anwendbarkeit des Produkts einschränken können.
Die im Zusammenhang mit der vorliegenden Erfindung angegebenen Temperaturen beziehen sich, sofern hier nicht anders angegeben, auf die Reaktionstemperatur. In einer Ausführungsform des erfindungsgemäßen Herstellverfahrens wird die Polykondensation (i) bei einer Temperatur von 180 °C bis 220 °C durchgeführt, z.B. bei einer Temperatur von 200 °C bis 220 °C.
Bei der im erfindungsgemäßen Herstellverfahren im Polykondensationsschritt (i) eingesetzten Asparaginsäure (a) kann es sich sowohl um L- als auch D- und DL-Asparaginsäure handeln. Bevorzugt wird L-Asparaginsäure eingesetzt.
Die im erfindungsgemäßen Verfahren im Polykondensationsschritt (i) eingesetzte Menge an Methansulfonsäure (b) bezieht sich, sofern nicht anders angegeben, auf die eingesetzte Menge an Asparaginsäure (a). Erfindungsgemäß werden 1 bis 15 mol% Methansulfonsäure eingesetzt. Das heißt, dass wenn beispielsweise 10 molAsparaginsäure (a) in der Polykondensation (i) eingesetzt werden, werden 0,1 bis 1,5 mol Methansolfonsäure (b) eingesetzt. Bevorzugt werden 2 bis 13 mol%, besonders bevorzugt 3 bis 10 mol% Methansulfonsäure (b) eingesetzt, bezogen auf die eingesetzte Menge Asparaginsäure (a) (in mol).
Die Polykondensation (i) des erfindungsgemäßen Herstellverfahrens findet für 1 Minute bis 50 Stunden statt,

bevorzugt 30 Minuten bis 20 Stunden, besonders bevorzugt 1 Stunde bis 15 Stunden.

Im Zusammenhang mit der vorliegenden Erfindung kann der Quotient aus gewichtsmittlerem Molekulargewicht (Mw) zum zahlenmittleren Molekulargewicht (Mn) der hergestellten Polyasparaginsäure beispielsweise bei höchstens 3 liegen, bevorzugt bei höchstens 2,8, besonders bevorzugt bei höchstens 2,5. Die Molekulargewichtsverteilung der erfindungsgemäß hergestellten Polyasparaginsäure kann unter anderem mittels Gel-Permeations-Chromatographie (GPC) ermittelt werden, wie dem Fachmann bekannt ist. Die im Zusammenhang mit der vorliegenden Erfindung angegebenen Molekularmassen Mw und Mn beziehen sich auf die Natrium-Salze der hergestellten Polyasparaginsäuren, welche von der eingesetzten Methansulfonsäure befreit wurden wie dem Fachmann bekannt und hierin beschrieben. Dies lässt sich beispielsweise durch vorheriges Waschen der im Polykondensationsschritt entstandenen Polyaspartimide mit Wasser und anschließender Hydrolyse beispielsweise mit Natronlauge erzielen.

Die im Zusammenhang mit der vorliegenden Erfindung angegebenen Molekularmassen Mw und Mn können unter anderem mit Hilfe einer Kalibrierkurve, die mit eng verteilten Natriumpolyacrylat-Standards der Fa. Polymer Standard Service mit Molekulargewichten von M = 1.250 g/mol bis M = 130500 g/mol erstellt werden kann, berechnet werden, wie dem Fachmann bekannt und in den Beispielen gezeigt ist. Für die Kalibrierung können unter anderem zusätzlich Na-Acrylat mit einem Molekulargewicht von M = 96 und ein PEG-Standard mit M = 620, der mit Na-PAA M = 150 gleichgesetzt wird, benutzt werden.

Die in Schritt (ii) der erfindungsgemäßen Verfahrens eingesetzte Base kann im Prinzip jede für den Fachmann geeignete Base sein. Solche Basen umfassen unter anderem Alkali- und Erdalkalimetallbasen wie Natronlauge, Kalilauge, Calciumhydroxid oder Bariumhydroxid; Carbonate wie Soda und Kaliumcarbonat; Ammoniak und primäre, sekundäre oder tertiäre Amine; andere Basen mit primären, sekundären oder tertiären Aminogruppen. In einer Ausführungsform der vorliegenden Erfindung ist die in Schritt (ii) der erfindungsgemäßen Verfahrens eingesetzte Base ausgewählt aus der Gruppe bestehend aus Natronlauge, Kalilauge, Calciumhydroxid, Bariumhydroxid, Soda, Kaliumcarbonat, Ammoniak und Ammoniumhydroxid. Bevorzugt ist im Zusammenhang mit der vorliegenden Erfindung sind Natronlauge oder Ammoniumhydroxid.

Die im optionalen Schritt (iii) des erfindungsgemäßen Verfahrens eingesetzte Mineralsäure kann beispielsweise Schwefelsäure oder Salzsäure sein. Es ist aber auch jede andere Säure möglich, welche für den Fachmann erkennbar zur Ansäuerung des Salzes der Polyasparaginsäure zum Erhalt der entsprechenden Säureform geeignet ist. Die Säureform der Polyasparaginsäure kann aber auch durch Behandlung mit einem sauren Ionenaustauscher wie zum Beispiel Amberlite IR 120 (Hydrogen Form) erhalten werden, in dem man beispielsweise die wässrige Na-Salzlösung (oder Lösung eines entsprechenden anderen Salzes) der Polyasparaginsäure über eine mit dem sauren Ionenaustauscher gepackten Säule fließen lässt.

Die Herstellung der erfindungsgemäß einzusetzenden Polyasparaginsäuren erfolgt im Allgemeinen über eine Polykondensation von Asparaginsäure mit 1 bis 15 mol% Methansulfonsäure(gemessen an der eingesetzten Menge Asparaginsäure) und anschließender Hydrolyse der Polykondensate unter Zugabe einer Base wie hier oben und unten dargestellt und beschrieben. Im Folgenden wird die Herstellung der erfindungsgemäß einzusetzenden Polyasparaginsäuren beispielhaft beschrieben. Diese Herstellbeschreibung darf nicht verstanden werden als limitierend im Hinblick auf die erfindungsgemäß einzusetzenden Polyasparaginsäuren. Die erfindungsgemäß einzusetzenden Polyasparaginsäuren umfassen neben solchen, welche nach der folgenden Herstellbeschreibung hergestellt werden auch solche, welche durch das nachfolgende Verfahren herstellbar sind. Die erfindungsgemäß einzusetzenden Polyasparaginsäuren können z.B. hergestellt werden durch Polykondensation von Asparaginsäure und 1 bis 15 mol% Methansulfonsäure wie hier beschrieben. Die Polykondensation kann bei Temperaturen von 170 °C bis 230 °C erfolgen, bevorzugt bei 190 °C bis 220°C, beispielsweise bei 200 °C bis 220 °C. Die Kondensation (das Tempern) wird vorzugsweise im Vakuum oder unter Inertgasatmosphäre (z.B. $N_2$ oder Argon) durchgeführt. Die Kondensation kann aber auch unter erhöhtem Druck oder in einem Gasstrom, z.B. Kohlendioxid, Luft, Sauerstoff oder Wasserdampf erfolgen. Je nach den gewählten Reaktionsbedingungen liegen die Reaktionszeiten für die Kondensation im Allgemeinen zwischen 1 Minute und 50 Stunden. Die Polykondensation kann beispielsweise in fester Phase durchgeführt werden, in dem man zunächst eine wässrige Lösung bzw. Suspension von Asparaginsäure und Methansulfonsäure herstellt und die Lösung zur Trockne eindampft. Hierbei kann bereits eine Kondensation einsetzen. Für die Kondensation eignen sich beispielsweise als Reaktionsapparate Heizbänder, Kneter, Mischer, Schaufeltrockner, Zähphasentrockner, Extruder, Drehrohröfen und andere beheizbare Vorrichtungen, in denen die Kondensation von Feststoffen unter Entfernung von Reaktionswasser durchgeführt werden kann. Für die Kondensation eignen sich beispielsweise auch konvektive Apparaturen wie Wirbelschichtreaktoren. Polykondensate mit niedrigem Molekulargewicht können in auch druckdicht verschlossenen Gefäßen hergestellt werden, indem das entstehende Reaktionswasser nicht oder nur teilweise entfernt wird. Die Polykondensation kann auch in Apparaturen erfolgen, bei denen die notwendige thermische Energie hauptsächlich durch Strahlung definierter Frequenz (z.B. Infrarot, Hochfrequenz, Mikrowelle) zugeführt wird.

Bei der thermischen Polykondensation von Asparaginsäure mit Methansulfonsäure fällt das Polykondensat im Allgemeinen in Form der wasserunlöslichen Polyaspartimide an. Die eingesetzten kleinen Mengen an Methansulfonsäure können im Produkt verbleiben, ohne dass Nachteile in der Anwendbarkeit entstehen. Falls es jedoch erwünscht ist,

können die Polykondensate der Asparaginsäure von der Methansulfonsäure beispielsweise dadurch gereinigt werden, indem das wasserunlösliche Polyaspartimid zerkleinert und mit Wasser bei Temperaturen von 10 bis 100 °C extrahiert wird. Dabei wird die eingesetzte Methansulfonsäure ausgewaschen. Nicht umgesetzte Asparaginsäure lässt sich durch Extraktion mit 1-N-Salzsäure leicht herauslösen.

Die Polyasparaginsäuren (bzw. deren Salze wie oben beschrieben) werden aus den Polykondensaten vorzugsweise dadurch erhalten, dass man die Polykondensate in Wasser aufschlämmt und bei Temperaturen vorzugsweise im Bereich von 0 °C bis 90 °C unter Zugabe einer hier beschriebenen geeigneten Base hydrolysiert und neutralisiert. Die Hydrolyse und Neutralisation findet vorzugsweise bei pH-Werten von 8 bis 10 statt. Vorteilhaft im Sinne der Erfindung ist es auch, die Kondensation und die Hydrolyse apparativ miteinander zu koppeln, indem man bspw. die Hydrolyse im selben Gefäß/Reaktor/Apparat durchführt wie die vorhergehende Kondensation.

Die erfindungsgemäß hergestellten/herstellbaren bzw. einzusetzenden Polyasparaginsäuren bzw. ihre Salze können als wässrige Lösung oder in fester Form, z.B. in Pulver- oder Granulatform verwendet werden. Wie dem Fachmann bekannt ist, kann man die Pulver- oder Granulatform beispielsweise durch Sprühtrocknung, Sprühgranulierung, Wirbelschicht-Sprühgranulierung, Walzentrockung oder Gefriertrocknung der wässrigen Lösung der Polyasparaginsäuren bzw. ihren Salzen erhalten.

Die erfindungsgemäß herstellbaren Polyasparaginsäuren zeichnen sich unter anderem durch ihre sehr gute belagsinhibierende und dispergierende Wirkung aus, und zwar sowohl gegenüber anorganischen als auch organischen Belägen. Insbesondere inhibieren sie Beläge aus Calcium- und Magnesiumcarbonat und Calcium- und Magnesiumphosphaten und -phosphonaten. Zusätzlich verhindern sie Ablagerungen, die aus den Schmutzbestandteilen einer Spülflotte stammen, wie Fett-, Eiweiß- und Stärkebeläge.

Die Polyasparaginsäuren können als Zusatzstoff in Reinigungs-, Spülmittel- (insbesondere maschinelle Geschirrspülmittel-) oder Waschmitteln, als auch als Belagsinhibitoren oder Dispergiermittel in wasserführenden Systemen verwendet werden wie hier dargestellt und beschrieben.

Die erfindungsgemäß herstellbaren Polyasparaginsäuren können in Zusammensetzungen - insbesondere Reinigungsmittel-, Spülmittel- und Waschmittelzusammensetzungen -, verwendet werden.

Solche Zusammensetzungen enthalten neben den Polyasparaginsäuren der Erfindung weitere Bestandteile wie bspw. Lösemittel, Tenside oder Komplexbildner. Die Polyasparaginsäuren der Erfindung können nach dem Fachmann bekannten Verfahren direkt in die Formulierungen (Gemische) in ihren verschiedenen Darreichungsformen eingearbeitet werden. Hierbei sind beispielsweise feste Formulierungen wie Pulver, Tabletten, gelartige und flüssige Formulierungen zu nennen. Die erfindungsgemäßen maschinellen Geschirrspülmittelzusammensetzungen und die anderen Reinigungsmittel-, Spülmittel- und Waschmittelzusammensetzungen können in flüssige, gelartiger oder fester Form, ein- oder mehrphasig, als Tabletten oder in Form anderer Dosiereinheiten, verpackt oder unverpackt bereitgestellt werden. Die erfindungsgemäß herstellbaren Polyasparaginsäuren können in diesem Zusammenhang sowohl in mehrkomponentigen Produktsystemen (getrennter Einsatz von Reiniger, Klarspüler und Regeneriersalz), als auch in solchen Geschirrspülmitteln eingesetzt werden, in denen die Funktionen von Reiniger, Klarspülmittel und Regeneriersalz in einem Produkt vereinigt sind (bspw. 3-in-1-Produkte, 6-in-1-Produkte, 9-in-1-Produkte, all-in-one Produkte).

Die erfindungsgemäß herstellbaren Polyasparaginsäuren können daher ferner in Zusammensetzungen verwendet werden,. In einer Ausführungsform handelt es sich hierbei um Spülmittelzusammensetzungen, insbesondere solche, welche für das maschinelle Geschirrspülen (ADW) geeignet sind.

Spülmittelzusammensetzungen umfassen beispielsweise

(a) 1-20 Gew%, bevorzugt 1-15 Gew%, besonders bevorzugt 2-12 Gew% der hier beschriebenen und erfindungsgemäß hergestellten bzw. herstellbaren Polyasparaginsäure;
(b) 0-50 Gew% Komplexbildner;
(c) 0,1-80 Gew% Builder und/oder Co-Builder;
(d) 0,1-20 Gew% nichtionische Tenside;
(e) 0-30 Gew% Bleichmittel, Bleichaktivatoren und Bleichkatalysatoren;
(f) 0-8 Gew% Enzyme; und
(g) 0-50 Gew% Zusatzstoffe.

Als Komplexbildner (b) können beispielsweise eingesetzt werden: Nitrilotriessigsäure, Ethylendiamintetraessigsäure, Diethylentriaminpentaessigsäure, Hydroxyethylethylendiamintriessigsäure, Methylglycindiessigsäure, Glutaminsäurediessigsäure, Iminodibernsteinsäure, Hydroxyiminodibernsteinsäure, Ethylendiamindibernsteinsäure, Asparaginsäurediessigsäure, sowie jeweils deren Salze. Bevorzugte Komplexbildner (b) sind Methylglycindiessigsäure und Glutaminsäurediessigsäure und deren Salze. Besonders bevorzugte Komplexbildner (b) sind Methylglycindiessigsäure und deren Salze. Bevorzugt sind erfindungsgemäß 3 bis 50 Gew% Komplexbildner (b).

Als Builder und/oder Co-Builder (c) können insbesondere wasserlösliche oder wasserunlösliche Substanzen, deren Hauptaufgabe im Binden von Calcium- und Magnesiumionen besteht, eingesetzt werden. Dies können niedermolekulare Carbonsäuren sowie deren Salze wie Alkalicitrate sein, insbesondere wasserfreies Trinatriumcitrat oder Trinatriumcitratdihydrat, Alkalisuccinate, Alkalimalonate, Fettsäuresulfonate, Oxydisuccinat, Alkyl- oder Alkenyldisuccinate, Gluconsäuren, Oxadiacetate, Carboxymethyloxysuccinate, Tartratmonosuccinat, Tartratdisuccinat, Tartratmonoacetat, Tartratdiacetat und $\alpha$-Hydroxypropionsäure.

Eine weitere Substanzklasse mit Cobuildereigenschaften, welche in den erfindungsgemäßen Reinigungsmitteln enthalten sein können, stellen die Phosphonate dar. Dabei handelt es sich insbesondere um Hydroxyalkan- bzw. Aminoalkanphosphonate. Unter den Hydroxyalkanphosphonaten ist das 1-Hydroxyethan-1,1-diphosphonat (HEDP) von besonderer Bedeutung als Cobuilder. Es wird vorzugsweise als Natriumsalz eingesetzt, wobei das Dinatriumsalz neutral und das Tetranatriumsalz alkalisch (pH 9) reagiert. Als Aminoalkanphosphonate kommen vorzugsweise Ethylendiamintetramethylenphosphonat (EDTMP), Diethylentriaminpentamethylenphosphonat (DTPMP) sowie deren höhere Homologe in Frage. Sie werden vorzugsweise in Form der neutral reagierenden Natriumsalze, z.B. als Hexanatriumsalz der EDTMP bzw. als Hepta- und Octa-Natriumsalz der DTPMP, eingesetzt. Als Builder wird dabei aus der Klasse der Phosphonate bevorzugt HEDP verwendet. Die Aminoalkanphosphonate besitzen zudem ein ausgeprägtes Schermetallbindevermögen. Dementsprechend kann es, insbesondere wenn die Mittel auch Bleiche enthalten, bevorzugt sein, Aminoalkanphosphonate, insbesondere DTPMP, einzusetzen, oder Mischungen aus den genannten Phosphonaten zu verwenden.

Unter anderem können als Builder Silikate eingesetzt werden. Enthalten sein können kristalline schichtförmige Silikate mit der allgemeinen Formel $NaMSi_xO_{2x+1}\ yH_2O$, wobei M Natrium oder Wasserstoff bedeutet, x eine Zahl von 1,9 bis 22, vorzugsweise von 1,9 bis 4, wobei besonders bevorzugte Werte für x 2, 3 oder 4 sind und y eine Zahl von 0 bis 33, vorzugsweise 0 bis 20 ist. Daneben können amorphe Natriumsilikate mit einem $SiO_2 : Na_2O$-Verhältnis von 1 bis 3,5, vorzugsweise von 1,6 bis 3 und insbesondere von 2 bis 2,8 zum Einsatz kommen.

Weiterhin können als Builder und/oder Co-Builder (c) im Zusammenhang mit der erfindungsgemäßen Spülmittelzusammensetzung Carbonate und Hydrogencarbonate eingesetzt werden, unter welchen die Alkalisalze, insbesondere Natriumsalze, bevorzugt werden.

Weiterhin können als Cobuilder Homo- und Copolymere der Acrylsäure oder der Methacrylsäure eingesetzt werden, die bevorzugt eine gewichtsmittlere Molmasse von 2.000 bis 50.000 g/mol aufweisen. Als Comonomere eignen sich insbesondere monoethylenisch ungesättigte Dicarbonsäuren wie Maleinsäure, Fumarsäure und Itaconsäure sowie deren Anhydride wie Maleinsäureanhydrid. Es eignen sich auch Sulfonsäuregruppen haltige Comonomere wie 2-Acrylamido-2-methylpropansulfonsäure, Allylsulfonsäure und Methansulfonsäure. Auch hydrophobe Comonomere sind geeignet wie beispielsweise Isobuten, Diisobuten, Styrol, alpha-Olefine mit 10 oder mehr Kohlenstoffatomen. Hydrophile Monomere mit Hydroxyfunktion oder Alkylenoxidgruppen können ebenfalls als Comonomere verwendet werden. Beispielsweise seien genannt: Allylalkohol und Isoprenol sowie deren Alkoxylate und Methoxypolyethylenglykol(meth)acrylat. Bevorzugte Mengen sind für Builder und/oder Co-Builder im Zusammenhang mit der erfindungsgemäßen Spülmittelzusammensetzung 5 bis 80 Gew%, besonders bevorzugt 10 bis 75 Gew%, 15 bis 70 Gew% oder 15 bis 65 Gew%.

Als nichtionische Tenside (d) im Zusamenhang mit der erfindungsgemäßen Spülmittelzusammensetzung können beispielsweise schwach oder niedrig schäumende nichtionische Tenside eingesetzt werden. Diese können in Anteilen von 0,1 bis 20 Gew%, bevorzugt von 0,1 bis 15 Gew%, besonders bevorzugt von 0,25 bis 10 Gew% oder 0,5 bis 10 Gew% vorliegen. Geeignete nichtionische Tenside umfassen unter anderem Tenside der allgemeinen Formel (I)

$$R^1\text{-}O\text{-}(CH_2CH_2O)_a\text{-}(CHR^2CH_2O)_b\text{-}R^3 \qquad (I),$$

worin $R^1$ ein linearer oder verzweigter Alkylrest mit 8 bis 22 C-Atomen ist,
$R^2$ und $R^3$ unabhängig voneinander Wasserstoff oder ein linearer oder verzweigter Alkylrest mit 1 bis 10 C-Atomen oder H sind, wobei $R^2$ bevorzugt Methyl ist, und
a und b unabhängig voneinander 0 bis 300 sind. Bevorzugt ist a = 1 - 100 und b = 0 - 30.

Auch geeignet sind Tenside der Formel (II)

$$R^4\text{-}O\text{-}[CH_2CH(CH_3)O]_c[CH_2CH_2O]_d[CH_2CH(CH_3)O]_eCH_2CH(OH)R^5 \qquad (II),$$

worin $R^4$ für einen linearen oder verzweigten aliphatischen Kohlenwasserstoffrest mit 4 bis 22 Kohlenstoffatomen oder Mischungen hieraus steht,
$R^5$ einen linearen oder verzweigten Kohlenwasserstoffrest mit 2 bis 26 Kohlenstoffatomen oder Mischungen hieraus bezeichnet,
c und e für Werte zwischen 0 und 40 steht, und

d für einen Wert von mindestens 15 steht.

Auch geeignet sind Tenside der Formel (III)

$$R^6O\text{-}(CH_2CHR^7O)_f(CH_2CH_2O)_g(CH_2CHR^8O)_h\text{-}CO\text{-}R^9 \quad \text{(III)},$$

worin $R^6$ ein verzweigter oder unverzweigter Alkylrest mit 8 bis 16 Kohlenstoffatomen ist,
$R^7$, $R^8$ unabhängig voneinander H oder ein verzweigter oder unverzweigter Alkylrest mit 1 bis 5 Kohlenstoffatomen sind,
$R^9$ ein unverzweigter Alkylrest mit 5 bis 17 Kohlenstoffatomen ist,
f, h unabhängig voneinander eine Zahl von 1 bi 5 sind, und
g eine Zahl von 13 bis 35 ist.

Die Tenside der Formeln (I), (II) und (III) können sowohl statistische Copolymere als auch Block-Copolymere sein, bevorzugt sind sie als Block-Copolymere.

Weiterhin können Di- und Multi-blockcopolymerisate, aufgebaut aus Ethylenoxid und Propylenoxid, eingesetzt werden, die beispielsweise unter der Bezeichnung Pluronic® (BASF SE) oder Tetronic® (BASF Corporation) kommerziell erhältlich sind. Weiterhin können Umsetzungsprodukte aus Sorbitanestern mit Ethylenoxid und/oder Propylenoxid verwendet werden. Ebenfalls eignen sich Aminoxide oder Alkylglycoside. Eine Übersicht geeigneter nichtionischer Tenside sind in EP-A 851 023 sowie in DE-A 198 19 187 offenbart.

Es können auch Gemische mehrerer verschiedener nichtionischer Tenside enthalten sein. Die erfindungsgemäßen Spülmittelzusammensetzungen können weiterhin anionische oder zwitterionische Tenside enthalten, bevorzugt in Mischung mit nichtionischen Tensiden. Geeignete anionische und zwitterionischer Tenside sind ebenfalls in EP-A 851 023 sowie DE-A 198 19 187 genannt.

Als Bleichmittel und Bleichaktivatoren (e) können mit den Spülmittelzusammensetzungen dem Fachmann bekannte Vertreter eingesetzt werden. Bleichmittel unterteilen sich in Sauerstoffbleichmittel und chlorhaltige Bleichmittel. Verwendung als Sauerstoffbleichmittel finden Alkalimetallperborate und deren Hydrate sowie Alkalimetallpercarbonate. Bevorzugte Bleichmittel sind hierbei Natriumperborat in Form des Mono- oder Tetrahydrats, Natriumpercarbonat oder die Hydrate von Natriumpercarbonat. Ebenfalls als Sauerstoffbleichmittel einsetzbar sind Persulfate und Wasserstoffperoxid. Typische Sauerstoffbleichmittel sind auch organische Persäuren wie beispielsweise Perbenzoesäure, Peroxy-alpha-Naphthoesäure, Peroxylaurinsäure, Peroxystearinsäure, Phthalimidoperoxycapronsäure, 1,12-Diperoxydodecandisäure, 1,9-Diperoxyazelainsäure, Diperoxoisophthalsäure oder 2-Decyldiperoxybutan-1,4-disäure. Außerdem können auch folgende Sauerstoffbleichmittel in der Spülmittelzusammensetzung Verwendung finden: Kationische Peroxysäuren, die in den Patentanmeldungen US 5,422,028, US 5,294,362 sowie US 5,292,447 beschrieben sind, und Sulfonylperoxysäuren, die in der Patentanmeldung US 5,039,447 beschrieben sind. Sauerstoffbleichmittel können in Mengen von im Allgemeinen 0,1 bis 30 Gew%, bevorzugt von 1 bis 20 Gew%, besonders bevorzugt von 3 bis 15 Gew%, bezogen auf die gesamte Spülmittelzusammensetzung, eingesetzt werden.

Chlorhaltige Bleichmittel sowie die Kombination von chlorhaltigen Bleichmittel mit peroxidhaltigen Bleichmitteln können im Zusammenhang mit den erfindungsgemäßen Spülmittelzusammensetzungen ebenfalls verwendet werden. Bekannte chlorhaltige Bleichmittel sind beispielsweise 1,3-Dichloro-5,5-dimethylhydantoin, N-Chlorosulfamid, Chloramin T, Dichloramin T, Chloramin B, N,N'-Dichlorbenzoylharnstoff, p-Toluolsulfondichloroamid oder Trichlorethylamin. Bevorzugte chlorhaltige Bleichmittel sind hierbei Natriumhypochlorit, Calciumhypochlorit, Kaliumhypochlorit, Magnesiumhypochlorit, Kaliumdichloroisocyanurat oder Natriumdichloroisocyanurat. Chlorhaltige Bleichmittel können in diesem Zusammenhang in Mengen von 0,1 bis 30 Gew%, bevorzugt von 0,1 bis 20 Gew%, bevorzugt von 0,2 bis 10 Gew%, besonders bevorzugt von 0,3 bis 8 Gew%, bezogen auf die gesamte Spülmittelzusammensetzung, eingesetzt werden.

Weiterhin können in geringen Mengen Bleichmittelstabilisatoren wie beispielsweise Phosphonate, Borate, Metaborate, Metasilikate oder Magnesiumsalze zugegeben werden.

Bleichaktivatoren können Verbindungen sein, welche unter Perhydrolysebedingungen aliphatische Peroxocarbonsäuren mit vorzugsweise 1 bis 10 Kohlenstoffatomen, insbesondere 2 bis 4 Kohlenstoffatomen, und/oder substituierte Perbenzoesäure ergeben. Geeignet sind hierbei unter anderem Verbindungen, die eine oder mehrere N- bzw. O-Acylgruppen und/oder gegebenenfalls substituierte Benzoylgruppen enthalten, beispielsweise Substanzen aus der Klasse der Anhydride, Ester, Imide, acylierten Imidazole oder Oxime. Beispiele sind Tetraacetylethylendiamin (TAED), Tetraacetylmethylendiamin (TAMD), Tetraacetylglykoluril (TAGU), Tetraacetylhexylendiamin (TAHD), N-Acylimide, wie beispielsweise N-Nonanoylsuccinimid (NOSI), acylierte Phenolsulfonate, wie beispielsweise n-Nonanoyl- oder Isononanoyloxybenzolsulfonate (n- bzw. iso-NOBS), Pentaacetylglucose (PAG), 1,5-Diacetyl-2,2-dioxohexahydro-1,3,5-triazin (DADHT) oder Isatosäureanhydrid (ISA). Ebenfalls als Bleichaktivatoren eignen sich Nitrilquats wie beispielsweise N-Methyl-Morpholinium-Acetonitril-Salze (MMA-Salze) oder Trimethylammoniumacetonitril-Salze (TMAQ-Salze). Bevorzugt eignen sich Bleichaktivatoren aus der Gruppe bestehend aus mehrfach acylierten Alkylendiaminen, besonders bevorzugt TAED, N-Acylimide, besonders bevorzugt NOSI, acylierte Phenolsulfonate, besonders bevorzugt n- oder iso-NOBS, MMA, und TMAQ. Bleichaktivatoren können im Zusammenhang mit der vorliegenden Erfindung in Mengen von 0,1 bis 30 Gew%, bevorzugt von 0,1 bis 10 Gew%, bevorzugt von 1 bis 9 Gew%, besonders bevorzugt von 1,5 bis 8 Gew%, bezogen auf die gesamte Spülmittelzusammensetzung eingesetzt werden.

Zusätzlich zu den konventionellen Bleichaktivatoren oder an deren Stelle können auch sogenannte Bleichkatalysatoren in Klarspülerpartikel eingearbeitet werden. Bei diesen Stoffen handelt es sich um bleichverstärkende Übergangsmetallsalze bzw. Übergangsmetallkomplexe wie beispielsweise Mangan-, Eisen-, Cobalt-, Ruthenium- oder Molybdän-Salenkomplexe oder carbonylkomplexe. Auch Mangan-, Eisen-, Cobalt-, Ruthenium-, Molybdän-, Titan-, Vanadium- und Kupfer-Komplexe mit stickstoffhaltigen Tripod-Liganden sowie Cobalt-, Eisen-, Kupfer- und Ruthenium-Aminkomplexe sind als Bleichkatalysatoren verwendbar.

Als Komponente (f) können die Spülmittelzusammensetzungen 0 bis 8 Gew.% Enzyme enthalten. Falls die Spülmittelzusammensetzungen Enzyme enthalten, enthalten sie diese bevorzugt in Mengen von 0,1 bis 8 Gew.%. Dem Spülmittel können Enzyme zugesetzt werden, um die Reinigungsleistung zu steigern oder unter milderen Bedingungen (z.B. bei niedrigen Temperaturen) die Reinigungsleistung in gleicher Qualität zu gewährleisten. Eingesetzt werden können die Enzyme in freier oder auf einem Träger chemisch oder physikalisch immobilisierter Form oder in verkapselter Form. Zu den am häufigsten verwendeten Enzymen gehören in diesem Zusammenhang Lipasen, Amylasen, Cellulasen und Proteasen. Weiterhin können beispielsweise auch Esterasen, Pectinasen, Lactasen und Peroxidasen eingesetzt werden. Bevorzugt werden erfindungsgemäß Amylasen und Proteasen eingesetzt.

Als Zusatzstoffe (g) können im Zusammenhang mit den Spülmittelzusammensetzungen beispielsweise anionische oder zwitterionische Tenside, Alkaliträger, polymere Dispergiermittel, Korrosionsinhibitoren, Entschäumer, Farbstoffe, Duftstoffe, Füllstoffe, Tablettensprengmittel, organische Lösungsmittel, Tablettierhilfsmittel, Disintegrationsmittel, Verdicker, Löslichkeitsvermittler, oder Wasser eingesetzt werden. Als Alkaliträger können beispielsweise neben den bereits bei den Buildersubstanzen genannten Ammonium- oder Alkalimetallcarbonaten, Ammonium- oder Alkalimetallhydrogencarbonaten und Ammonium- oder Alkalimetallsesquicarbonaten auch Ammonium- oder Alkalimetallhydroxide, Ammonium- oder Alkalisilikate und Ammonium- oder Alkalimetasilikate sowie Gemische der vorgenannten Stoffe eingesetzt werden.

Als Korrosionsinhibitoren können unter anderem Silberschutzmittel aus der Gruppe der Triazole, der Benzotriazole, der Bisbenzotriazole, der Aminotriazole, der Alkylaminotriazole und der Übergangsmetallsalze oder- komplexe eingesetzt werden.

Zur Verhinderung von Glaskorrosion, welche sich durch Trübungen, Irisieren, Schlieren und Linien auf den Gläsern bemerkbar macht, werden bevorzugt Glaskorrosionsinhibitoren eingesetzt. Bevorzugte Glaskorrosionsinhibitoren sind beispielsweise Magnesium- Zink und Bismuth-Salze und Komplexe.

Paraffinöle und Silikonöle können erfindungsgemäß optional als Entschäumer und zum Schutz von Kunststoff- und Metalloberflächen eingesetzt werden. Entschäumer werden bevorzugt in Anteilen von 0,001 Gew% bis 5 Gew% eingesetzt. Außerdem können Farbstoffe wie beispielsweise Patentblau, Konservierungsmittel wie beispielsweise Kathon CG, Parfüme und sonstige Duftstoffe der erfindungsgemäßen Reinigungsformulierung zugesetzt werden.

Ein geeigneter Füllstoff im Zusammenhang mit den Spülmittelzusammenstzungen ist beispielsweise Natriumsulfat.

Als weitere mögliche Zusatzstoffe sind amphotere und kationische Polymere zu nennen.

In einer Ausführungsform ist die Spülmittelzusammensetzung phosphatfrei. Unter dem Begriff "phosphatfrei" sind in diesem Zusammenhang auch solche Spülmittelzusammensetzungen umfasst, welche im Wesentlichen kein Phosphat, d.h. Phosphat in technisch unwirksamen Mengen enthalten. Dies umfasst insbesondere Zusammensetzungen mit weniger als 1,0 Gew%, bevorzugt weniger als 0,5 Gew% Phosphat bezogen auf die Gesamtzusammensetzung.

Die erfindungsgemäß herstellbaren Polyasparaginsäuren können ferner in Zusammensetzungen als Zusatzstoff in Spülmitteln, insbesondere in Spülmitteln für maschinelles Geschirrspülen (ADW) verwendet werden.

Die erfindungsgemäß herstellbaren Polyasparaginsäuren können als Waschkraftverstärker, Vergrauungsinhibitor und Inkrustationsinihibitor in Wasch- und Reinigungsmittelzusammensetzungen (z.B. als Additive für Wasch- und Reinigungsmittel von Textilien, Waschhilfsmittel, Wäschenachbehandlungsmittel) verwendet werden.

Die Wasch- und Reinigungsmittelzusammensetzungen, in denen die Polyasparaginsäuren eingesetzt werden können, können pulver-, granulat-, tabletten-, pasten-, gelförmig oder flüssig sein. Beispiele hierfür sind Vollwaschmittel, Feinwaschmittel, Colorwaschmittel, Wollwaschmittel, Gardinenwaschmittel, Baukastenwaschmittel, Waschtabletten, bar soaps, Fleckensalze, Wäschestärken und -steifen, und Bügelhilfen. Sie enthalten mindestens 0,1 Gew%, bevorzugt zwischen 0,1 und 10 Gew% und besonders bevorzugt 0,2 bis 5 Gew% der Polyasparaginsäuren. Die Zusammensetzungen sind je nach ihrer vorgesehenen Anwendung in ihrer Zusammensetzung der Art der zu waschenden Textilien oder der zu reinigenden Oberflächen anzupassen. Sie enthalten konventionelle Wasch- und Reinigungsmittelinhaltsstoffe, wie sie dem Stand der Technik entsprechen. Repräsentative Beispiele für solche Wasch- und Reinigungsmittelinhaltsstoffe und - zusammensetzungen werden im Folgenden beschrieben.

Die erfindungsgemäß herstellbaren Polyasparaginsäuren können ferner in flüssigen oder gelförmigen Wasch- und Reinigungsmittelzusammensetzungen, enthaltend

($A_L$) 0,1 bis 20 Gew% mindestens einer hier beschriebenen und erfindungsgemäß einzusetzenden Polyasparaginsäure,
($B_L$) 1 bis 80 Gew% Tenside,
($C_L$) 0,1 bis 50 Gew% Builder, Cobuilder und/oder Komplexbildner,
($D_L$) 0 bis 20 Gew% Bleichsystem,
($E_L$) 0,1 bis 60 Gew% Wasch- oder Reinigungsmittelinhaltsstoffe, d.h. andere übliche Inhaltsstoffe wie Alkaliträger, Entschäumer, Enzyme (z. B. Lipasen, Proteasen, Amylasen, Cellulasen), Farbstoffe, Duftstoffe, Parfümträger, Vergrauungsinhibitoren, Farbübertragungsinhibitoren, Farbschutzadditive, Faserschutzadditive, optische Aufheller, Soil-Release-Polyester, Korrosionsinhibitoren, Bakterizide und Konservierungsmittel, organische Lösemittel, Löslichkeitsvermittler, pH-Stellmittel, Hydrotope, Verdicker, Rheologiemodifizierer und/oder Alkanolamine, und
($F_L$) 0 bis 98,7 Gew% Wasser, verwendet werden.

Die Summe ($A_L$) bis ($F_L$) beträgt 100 Gew%.

Die Mengenverhältnisse der einzelnen Komponenten werden vom Fachmann abhängig vom jeweiligen Einsatzgebiet der flüssigen und gelförmigen Wasch- und Reinigungsmittelzusammensetzung eingestellt.

Die erfindungsgemäß herstellbaren Polyasparaginsäuren können ferner in festen Wasch- und Reinigungsmittelzusammensetzungen, enthaltend

($A_F$) 0,1 bis 20 Gew% mindestens einer hier beschriebenen und erfindungsgemäß einzusetzenden Polyasparaginsäure,
($B_F$) 1 bis 50 Gew% Tenside,
($C_F$) 0,1 bis 70 Gew% Builder, Cobuilder und/oder Komplexbildner,
($D_F$) 0 bis 30 Gew% Bleichsystem, und
($E_F$) 0,1 bis 70 Gew% Wasch- oder Reinigungsmittelinhaltsstoffe, d.h. andere übliche Inhaltsstoffe wie Stellmittel (z.B. Natriumsulfat), Entschäumer, Enzyme (z. B. Lipasen, Proteasen, Amylasen, Cellulasen), Farbstoffe, Duftstoffe, Parfümträger, Vergrauungsinhibitoren, Farbübertragungsinhibitoren, Farbschutzadditive, Faserschutzadditive, optische Aufheller, Soil-Release-Polyester, Korrosionsinhibitoren, Bakterizide und Konservierungsmittel, Auflösungsverbesserer, Sprengmittel, Prozesshilfsmittel und/oder Wasser, verwendet werden.

Die Summe der Komponenten aus ($A_F$) bis ($E_F$) ergibt 100 Gew%.

Die festen Wasch- und Reinigungsmittelzusammensetzungen können beispielsweise in Pulver-, Granulat-, Extrudat- oder Tablettenform vorliegen.

Die Mengenverhältnisse der einzelnen Komponenten werden vom Fachmann abhängig vom jeweiligen Einsatzgebiet der festen Wasch- und Reinigungsmittelzusammensetzung eingestellt.

Als Tenside ($B_L$ oder $B_F$) können beispielsweise nichtionische Tenside (Niotenside, NIS) eingesetzt werden. Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen oder verzweigten Resten aus Alkoholen nativen oder petrochemischen Ursprungs mit 12 bis 18 C-Atomen, zum Beispiel aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise $C_{12}$-$C_{14}$-Alkohole mit 3 EO, 5 EO, 7 EO oder 9 EO, $C_9$-$C_{11}$-Alkohol mit 7 EO, $C_{13}$-$C_{15}$-Alkohole mit 3 EO, 5 EO, 7 EO oder 9 EO, $C_{12}$-$C_{18}$-Alkohole mit 3 EO, 5 EO, 7 EO oder 9 EO und Mischungen aus diesen, wie Mischungen aus $C_{12}$-$C_{14}$-Alkohol mit 3 EO und $C_{12}$-$C_{18}$-Alkohol mit 7 EO, 2 Propylheptanol mit 3 bis 9 EO. Mischungen aus kurkettigen Alkoholethoxilaten (z. B. 2-Propylheptanol x 7 EO) und langkettigen Alkoholethoxilaten (z. B. C16,18 x 7 EO). Die angegebenen Ethoxylierungsgrade stellen statistische Mittelwerte (Zahlenmittel, Mn) dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO. Auch nichtionische Tenside, die Ethylenoxid (EO)- und Propylenoxid (PO)-Gruppen zusammen im Molekül enthalten, sind einsetzbar. Hierbei können Blockcopolymere mit EO-PO-Blockeinheiten bzw. PO-EO-Blockeinheiten eingesetzt werden, aber auch EO-PO-EO-Copolymere bzw. PO-EO-PO-Copolymere. Selbstverständlich sind auch gemischt alkoxylierte Niotenside einsetzbar, in denen EO- und PO-Einheiten nicht blockweise, sondern statistisch verteilt sind. Solche Produkte sind durch gleichzeitige Einwirkung von Ethylen- und Propylenoxid auf Fettalkohole erhältlich.

Außerdem können als weitere nichtionische Tenside erfindungsgemäß auch Alkylglykoside der allgemeinen Formel (V)

$R^{10}O(G)_i$ (V)

eingesetzt werden, worin $R^{10}$ für einen primären geradkettigen oder methylverzweigten, insbesondere in 2-Stellung methylverzweigten aliphatischen Rest mit 8 bis 22, vorzugsweise 12 bis 18 C-Atomen steht und G für eine Glykosideinheit mit 5 oder 6 C-Atomen, vorzugsweise für Glucose, steht. Der Oligomerisierungsgrad i, der die Verteilung von Monoglykosiden und Oligoglykosiden angibt, ist eine beliebige Zahl zwischen 1 und 10; vorzugsweise liegt i bei 1,2 bis 1,4.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester, wie sie beispielsweise in der japanischen Patentanmeldung JP 58/217598 beschrieben sind oder die vorzugsweise nach dem in der internationalen Patentanmeldung WO 90/13533 beschriebenen Verfahren hergestellt werden. Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können in diesem Zusammenhang geeignet sein. Die Menge (das Gewicht) dieser nichtionischen Tenside beträgt vorzugsweise nicht mehr als die der ethoxylierten Fettalkohole, insbesondere nicht mehr als die Hälfte davon.

Weitere geeignete Tenside ($B_L$ oder $B_F$) sind Polyhydroxyfettsäureamide der Formel (VI)

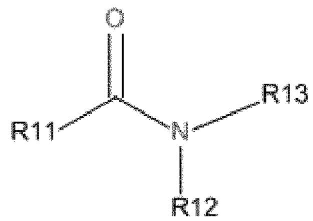

(VI),

worin R11C(=O) für einen aliphatischen Acylrest mit 6 bis 22 Kohlenstoffatomen, R12 für Wasserstoff, einen Alkyl- oder Hydroxyalkylrest mit 1 bis 4 Kohlenstoffatomen und R13 für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können. Zur Gruppe der Polyhydroxyfettsäureamide gehören in diesem Zusammenhang auch Verbindungen der Formel (VII)

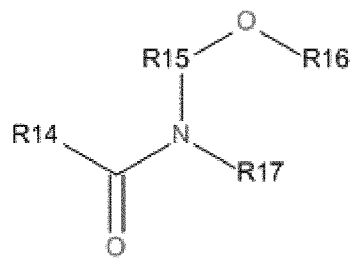

(VII),

worin R14 für einen linearen oder verzweigten Alkyl- oder Alkenylrest mit 7 bis 12 Kohlenstoffatomen, R15 für einen linearen, verzweigten oder cyclischen Alkylenrest mit 2 bis 8 Kohlenstoffatomen oder einen Arylenrest mit 6 bis 8 Kohlenstoffatomen, und R16 für einen linearen, verzweigten oder cyclischen Alkylrest oder einen Arylrest oder einen Oxy-Alkylrest mit 1 bis 8 Kohlenstoffatomen steht, wobei $C_1$-$C_4$-Alkyl- oder Phenylreste bevorzugt sind, und R17 für einen linearen Polyhydroxyalkylrest steht, dessen Alkylkette mit mindestens zwei Hydroxylgruppen substituiert ist, oder alkoxylierte, vorzugsweise ethoxylierte oder propoxylierte Derivate dieses Restes. R17 wird vorzugsweise durch reduktive Aminierung eines Zuckers erhalten, beispielsweise Glucose, Fructose, Maltose, Lactose, Galactose, Mannose oder Xylose. Die N-Alkoxy- oder N-Aryloxy-substituierten Verbindungen können dann beispielweise gemäß WO 95/07331

durch Umsetzung mit Fettsäuremethylestern in Gegenwart eines Alkoxids als Katalysator in die gewünschten Polyhydroxyfettsäureamide überführt werden.

Tenside ($B_L$ oder $B_F$) können auch anionische Tenside (Aniontenside) sein. Als anionische Tenside können im Rahmen der vorliegenden Erfindung beispielsweise solche vom Typ der Sulfonate und Sulfate eingesetzt. Als Tenside vom Sulfonat-Typ kommen dabei vorzugsweise $C_9$-$C_{13}$-Alkylbenzolsulfonate, Olefinsulfonate, d.h. Gemische aus Alken- und Hydroxyalkansulfonaten sowie Disulfonaten, wie man sie beispielsweise aus $C_{12}$-$C_{18}$-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus $C_{12}$-$C_{18}$-Alkanen beispielsweise durch Sulfochlorierung oder Sulfoxidation mit anschließender Hydrolyse bzw. Neutralisation gewonnen werden. Ebenso sind auch die Ester von $\alpha$-Sulfofettsäuren (Estersulfonate), zum Beispiel die $\alpha$-sulfonierten Methylester der hydrierten Kokos-, Palmkern- oder Talgfettsäuren geeignet. Weitere geeignete Aniontenside können erfindungsgemäß sulfierte Fettsäureglycerinester sein. Unter Fettsäureglycerinestern sind unter anderem die Mono-, Di- und Triester sowie deren Gemische zu verstehen, wie sie bei der Herstellung durch Veresterung von einem Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.

Als Alk(en)ylsulfate werden hierbei die Alkali- und insbesondere die Natriumsalze der Schwefelsäurehalbester der $C_{12}$-$C_{18}$-Fettalkohole, beispielsweise aus Kokosfettalkohol, Talgfettalkohol, Lauryl-, Myristyl-, Cetyl- oder Stearylalkohol oder der $C_{10}$-$C_{20}$-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind die $C_{12}$-$C_{16}$-Alkylsulfate und $C_{12}$-$C_{15}$-Alkylsulfate sowie $C_{14}$-$C_{15}$-Alkylsulfate bevorzugt. Auch 2,3-Alkylsulfate, welche beispielsweise gemäß den US-Patentschriften 3,234,258 oder 5,075,041 hergestellt werden und als Handelsprodukte der Shell Oil Company unter dem Namen DAN® erhalten werden können, sind geeignete Aniontenside. Auch die Schwefelsäuremonoester der mit 1 bis 6 Mol Ethylenoxid ethoxylierten geradkettigen oder verzweigten $C_7$-$C_{21}$-Alkohole, wie 2-Methylverzweigte $C_9$-$C_{11}$-Alkohole mit im Durchschnitt 3,5 Mol Ethylenoxid (EO) oder $C_{12}$-$C_{18}$-Fettalkohole mit 1 bis 4 EO, sind unter anderem geeignet. Sie werden üblicherweise in Reinigungsmitteln aufgrund ihres hohen Schaumverhaltens nur in relativ geringen Mengen, beispielsweise in Mengen von 1 bis 5 Gew%, eingesetzt. Weitere geeignete Aniontenside sind auch die Salze der Alkylsulfobernsteinsäure, die auch als Sulfosuccinate oder als Sulfobernsteinsäureester bezeichnet werden und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten $C_8$-$C_{18}$- Fettalkoholreste oder Mischungen aus diesen. Insbesondere bevorzugte Sulfosuccinate enthalten einen Fettalkoholrest, der sich von ethoxylierten Fettalkoholen ableitet. Dabei sind wiederum Sulfosuccinate, deren FettalkoholReste sich von ethoxylierten Fettalkoholen mit engerr Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Insbesondere bevorzugte anionische Tenside sind Seifen. Geeignet sind gesättigte und ungesättigte Fettsäureseifen, wie die Salze der Laurinsäure, Myristinsäure, Palmitinsäure, Stearinsäure, (hydrierten) Erucasäure und Behensäure sowie insbesondere aus natürlichen Fettsäuren, zum Beispiel Kokos-, Palmkern-, Olivenöl- oder Talgfettsäuren, abgeleitete Seifengemische.

Die anionischen Tenside einschließlich der Seifen können erfindungsgemäß in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

Die Tenside ($B_L$ oder $B_F$) können auch kationische Tenside sein. Als besonders geeignete kationische Tenside seien hierbei beispielsweise genannt:

- $C_7$-$C_{25}$-Alkylamine;
- N,N-Dimethyl-N-(hydroxy-$C_7$-$C_{25}$-alkyl)ammoniumsalze;
- mit Alkylierungsmitteln quaternisierte Mono- und Di-($C_7$-$C_{25}$-alkyl)dimethylammo-niumverbindungen;
- Esterquats, insbesondere quaternäre veresterte Mono-, Di- und Trialkanolamine, die mit $C_8$-$C_{22}$-Carbonsäuren verestert sind;
- Imidazolinquats, insbesondere 1-Alkylimidazoliniumsalze der Formeln VIII oder IX

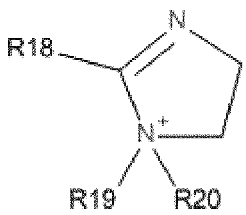

(VIII)

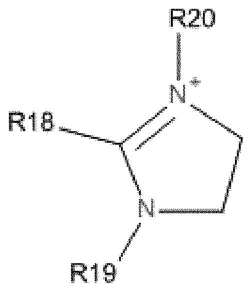

(IX),

wobei die Variablen folgende Bedeutung haben:

R18 $C_1$-$C_{25}$-Alkyl oder $C_2$-$C_{25}$-Alkenyl;
R19 $C_1$-$C_4$-Alkyl oder Hydroxy-$C_1$-$C_4$-alkyl;
R20 $C_1$-$C_4$-Alkyl, Hydroxy-$C_1$-$C_4$-alkyl oder ein Rest $R_1$-CO)-$R^{21}(CH_2)_j$- ($R^{21}$:-O- oder -NH-; j: 2 oder 3),

wobei mindestens ein Rest R18 ein $C_7$-$C_{22}$-Alkyl ist.

Die Tenside ($B_L$ oder $B_F$) können auch amphotere Tenside sein. Geeignete amphotere Tenside sind hierbei z.B. Alkylbetaine, Alkylamidbetaine, Aminopropionate, Aminoglycinate und amphotere Imidazoliumverbindungen.

Der Gehalt an Tensiden in flüssigen und gelförmigen Wasch- und Reinigungsmittel-zusammensetzungen beträgt vorzugsweise 2 bis 75 Gew% und insbesondere 5 bis 65 Gew%, jeweils bezogen auf die gesamte Zusammensetzung.

Der Gehalt an Tensiden in festen Wasch- und Reinigungsmittelzusammensetzungen beträgt vorzugsweise 2 bis 40 Gew% und insbesondere 5 bis 35 Gew%, jeweils bezogen auf die gesamte Zusammensetzung.

Als Builder, Cobuilder und/oder Komplexbildner ($C_L$ oder $C_F$) eignen sich unter anderem anorganische Builder wie:

- Kristalline und amorphe Alumosilikate mit ionenaustauschenden Eigenschaften, wie vor allem Zeolithe: Verschiedene Typen von Zeolithen sind geeignet, insbesondere die Zeolithe A, X, B, P, MAP und HS in ihrer Na-Form oder in Formen, in denen Na teilweise gegen andere Kationen wie Li, K, Ca, Mg oder Ammonium ausgetauscht ist;
- Kristalline Silikate, wie insbesondere Disilikate und Schichtsilikate, z.B. δ- und β-$Na_2Si_2O_5$. Die Silikate können in Form ihrer Alkalimetall-, Erdalkalimetall- oder Ammoniumsalze eingesetzt werden, bevorzugt sind die Na-, Li- und Mg-Silikate;
- Amorphe Silikate, wie Natriummetasilikat und amorphes Disilikat;
- Carbonate und Hydrogencarbonate: Diese können in Form ihrer Alkalimetall-, Erd-alkalimetall- oder Ammoniumsalze eingesetzt werden. Bevorzugt sind Na-, Li- und Mg-Carbonate und -Hydrogencarbonate, insbesondere Natriumcarbonat und/oder Natriumhydrogencarbonat; sowie
- Polyphosphate, wie Pentanatriumtriphosphat.

Als Cobuilder und Komplexbildner ($C_L$ oder $C_F$) eignen sich unter anderem:

- Niedermolekulare Carbonsäuren, wie Citronensäure, hydrophob modifizierte Citronensäure, z. B. Agaricinsäure, Äpfelsäure, Weinsäure, Gluconsäure, Glutarsäure, Bernsteinsäure, Imidodibernsteinsäure, Oxydibernsteinsäure, Propantricarbonsäure, Butantetracarbonsäure, Cyclopentantetracarbonsäure, Alkyl- und Alkenylbernsteinsäuren und Aminopolycarbonsäuren, z.B. Nitrilotriessigsäure, β-Alanindiessigsäure, Ethylendiamintetraessigsäure, Serindiessigsäure, Isoserindiessigsäure, N-(2-Hydroxyethyl)-iminoessigsäure, Ethylendiamindibernsteinsäure, Glutaminsäurediessigsäure und Methyl- und Ethylglycindiessigsäure oder deren Alkalimetallsalze;

- Oligomere und polymere Carbonsäuren, wie Homopolymere von Acrylsäure, Copolymere der Acrylsäure mit Sulfonsäuregruppen haltigen Comonomeren wie 2-Acrylamido-2-methylpropansulfonsäure (AMPS), Allylsulfonsäure und Vinylsulfonsäure, Oligomaleinsäuren, Copolymere der Maleinsäure mit Acrylsäure, Methacrylsäure oder $C_2$-$C_{22}$-Olefinen, z.B. Isobuten oder langkettigen $\alpha$-Olefinen, Vinyl-$C_1$-$C_8$-alkylether, Vinylacetat, Vinylpropionat, (Meth)Acrylsäureester von $C_1$-$C_8$-Alkoholen und Styrol. Bevorzugt sind die Homopolymere der Acrylsäure und Copolymere von Acrylsäure mit Maleinsäure oder AMPS. Die oligomeren und polymeren Carbonsäuren werden in Säureform oder als Natriumsalz eingesetzt;
- Phosphonsäuren wie z.B. 1-Hydroxyethylen(1,1-diphosphonsäure), Aminotri(methylenphosphonsäure), Ethylendiamintetra(methylenphosphonsäure) und Diethylentriaminpenta(methylenphosphonsäure) und deren Alkalimetallsalze.

Als Bleichmittel ($D_L$ oder $D_F$) kommen unter anderem in Betracht: Natriumperborattetrahydrat, Natriumperboratmono-hydrat, Natriumpercarbonat, Peroxypyrophosphate, Citratperhydrate sowie persaure Salze oder Persäuren, wie Perbenzoate, Peroxophthalate, Diperazelainsäure, Phthaloiminopersäure oder Diperdodecandisäure. Um beim Waschen bei Temperaturen von 60 °C und darunter eine verbesserte Bleichwirkung zu erreichen, können erfindungsgemäß Bleichaktivatoren in die Wasch- oder Reinigungsmittel eingearbeitet werden. Als Bleichaktivatoren können bspw. Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben, eingesetzt werden. Geeignet sind unter anderem Substanzen, die O- und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Triazinderivate, insbesondere 1,5-Diacetyl-2,4-dioxohexahydro-1,3,5-triazin (DADHT), acylierte Glykolurile, insbesondere Tetraacetylglykoluril (TAGU)1 N-Acylimide, insbesondere N-Nonanoylsuccinimid (NOSI), acylierte Phenolsulfonate, insbesondere n-Nonanoyloder Isononanoyloxybenzolsulfonat (nbzw. iso-NOBS), Carbonsäureanhydride, insbsondere Phthalsäureanhydrid, acylierte mehrwertige Alkohole, insbesondere Triacetin, Ethylenglykoldiacetat und 2,5-Diacetoxy-2,5- dihydrofuran. Zusätzlich zu den konventionellen Bleichaktivatoren oder an deren Stelle können erfindungsgemäß als Bestandteile ($D_L$) auch sogenannte Bleichkatalysatoren in die flüssigen Wasch- oder Reinigungsmittel eingearbeitet werden. Bei diesen Stoffen handelt es sich um bleichverstärkende Übergangsmetallsalze bzw. Übergangsmetallkomplexe wie beispielsweise Mn-, Fe-, Co-, Ru - oder Mo-Salenkomplexe oder -carbonylkomplexe. Auch Mn-, Fe-, Co-, Ru-, Mo-, Ti-, V- und Cu-Komplexe mit stickstoffhaltigen Tripod-Liganden sowie Co-, Fe-, Cu- und Ru-Aminkomplexe sind als Bleichkatalysatoren verwendbar.

Übliche Inhaltsstoffe für Reinigungs- oder Waschmittelzusammensetzungen ($E_L$ oder $E_F$) sind dem Fachmann bekannt und umfassen beispielsweise Alkaliträger, Entschäumer, Enzyme (z. B. Lipasen, Proteasen, Amylasen, Cellulasen), Farbstoffe, Duftstoffe, Parfümträger, Vergrauungsinhibitoren, Farbübertragungsinhibitoren, Farbschutzadditive, Faserschutzadditive, optische Aufheller, Soil-Release-Polyester, Korrosionsinhibitoren, Bakterizide und Konservierungsmittel, organische Lösemittel, Löslichkeitsvermittler, pH-Stellmittel, Hydrotope, Verdicker, Rheologiemodifizierer und/oder Alkanolamine für flüssige oder gelartige Reinigungs- oder Waschmittelzusammensetzungen ($E_L$), oder Stellmittel (z.B. Natriumsulfat), Entschäumer, Enzyme (z. B. Lipasen, Proteasen, Amylasen, Cellulasen), Farbstoffe, Duftstoffe, Parfümträger, Vergrauungsinhibitoren, Farbübertragungsinhibitoren, Farbschutzadditive, Faserschutzadditive, optische Aufheller, Soil-Release-Polyester, Korrosionsinhibitoren, Bakterizide und Konservierungsmittel, Auflösungsverbesserer, Sprengmittel, Prozesshilfsmittel und/oder Wasser für feste Reinigungs- oder Waschmittelzusammensetzungen ($E_F$).

Als Enzyme ($E_L$ oder $E_F$) kommen insbesondere solche aus der Klassen der Hydrolasen wie der Proteasen, Esterasen, Lipasen bzw. lipolytisch wirkende Enzyme, Amylasen, Cellulasen bzw. andere Glykosylhydrolasen und Gemische der genannten Enzyme in Frage. Alle diese Hydrolasen tragen in der Wäsche zur Entfernung von Verfleckungen wie protein-, fett- oder stärkehaltigen Verfleckungen und Vergrauungen bei. Cellulasen und andere Glykosylhydrolasen können darüber hinaus durch das Entfernen von Pilling und Mikrofibrillen zur Farberhaltung und zur Erhöhung der Weichheit des Textils beitragen. Zur Bleiche bzw. zur Hemmung der Farbübertragung können auch Oxireduktasen eingesetzt werden. Besonders gut geeignet sind aus Bakterienstämmen oder Pilzen wie *Bacillus subtilis, Bacillus licheniformis, Streptomyceusgriseus* und *Humicola insolens* gewonnene enzymatische Wirkstoffe. Vorzugsweise werden Proteasen vom Subtilisin-Typ und insbesondere Proteasen, die aus *Bacillus lentus* gewonnen werden, eingesetzt. Dabei sind Enzymmischungen, beispielsweise aus Protease und Amylase oder Protease und Lipase bzw. lipolytisch wirkenden Enzymen oder Protease und Cellulase oder aus Cellulase und Lipase bzw. lipolytisch wirkenden Enzymen oder aus Protease, Amylase und Lipase bzw. lipolytisch wirkenden Enzymen oder Protease, Lipase bzw. lipolytisch wirkenden Enzymen und Cellulase, insbesondere jedoch Protease und/oder Lipase-haltige Mischungen bzw. Mischungen mit lipolytisch wirkenden Enzymen von besonderem Interesse. Beispiele für derartige lipolytisch wirkende Enzyme sind die bekannten Cutinasen. Auch Peroxidasen oder Oxidasen können hierbei eingesetzt werden. Zu den geeigneten Amylasen zählen insbesondere $\alpha$-Amylasen, Iso-Amylasen, Pullulanasen und Pektinasen. Als Cellulasen werden vorzugsweise

Cellobiohydrolasen, Endoglucanasen und β-Glucosidasen, die auch Cellobiasen genannt werden, bzw. Mischungen aus diesen eingesetzt. Da sich verschiedene Cellulase-Typen durch ihre CMCase und Avicelase-Aktivitäten unterscheiden, können durch gezielte Mischungen der Cellulasen die gewünschten Aktivitäten eingestellt werden.

Die Enzyme können an Trägerstoffe adsorbiert sein, um sie gegen vorzeitige Zersetzung zu schützen. Der Anteil der Enzyme, Enzymmischungen oder Enzymgranulate kann erfindungsgemäß beispielsweise etwa 0,1 bis 5 Gew.-%, vorzugsweise 0,12 bis etwa 2,5 Gew.-% betragen, jeweils bezogen auf die Gesamtformulierung.

Geeignete Vergrauungsinhibitoren ($E_L$ oder $E_F$) sind beispielsweise Carboxymethylcellulose, Pfropfpolymere von Vinylacetat auf Polyethylenglykol, und Alkoxylate des Polyethylenimins.

Als Verdicker ($E_L$) können sogenannte Assoziativverdicker verwendet werden. Geeignete Beispiele für Verdicker sind dem Fachmann bekannt unter anderem in WO 2009/019225 A2, EP 013 836 oder WO 2006/016035 beschrieben.

Optische Aufheller (sogenannte "Weißtöner") ($E_L$ oder $E_F$) können den flüssigen Wasch- oder Reinigungsmitteln zugesetzt werden, um Vergrauungen und Vergilbungen der behandelten Textilen Flächengebilden zu beseitigen. Diese Stoffe ziehen auf die Faser auf und bewirken eine Aufhellung und vorgetäuschte Bleichwirkung, indem sie unsichtbare Ultraviolettstrahlung in sichtbares längerwelliges Licht umwandeln, wobei das aus dem Sonnenlicht absorbierte ultraviolette Licht als schwach bläuliche Fluoreszenz abgestrahlt wird und mit dem Gelbton der vergrauten bzw. vergilbten Wäsche reines Weiß ergibt. Geeignete Verbindungen stammen beispielsweise aus den Substanzklassen der 4,4'-Diamino-2,2'-stilbendisulfonsäuren (Flavonsäuren), 4,4'-Distyryl-biphenylen, Methylumbelliferone, Cumarine, Dihydrochinolinone, 1,3- Diarylpyrazoline, Naphthalsäureimide, Benzoxazol-, Benzisoxazol- und Benzimidazol-Systeme sowie der durch Heterocyclen substituierten Pyrenderivate. Die optischen Aufheller werden üblicherweise in Mengen zwischen 0,03 und 0,3 Gew.-%, bezogen auf das fertige Mittel, eingesetzt.

Als Farbübertragungsinhibitoren ($E_L$ oder $E_F$) geeignet sind beispielsweise Homo-, Co- und Pfropfpolymere von 1-Vinylpyrrolidon, 1-Vinylimidazol oder 4-Vinylpyridin-N-oxid. Auch mit Chloressigsäure umgesetzte Homo- und Copolymere des 4-Vinylpyridins eignen sich als Farbübertragungsinhibitoren.

Waschmittelinhaltsstoffe sind im Übrigen allgemein bekannt. Detaillierte Beschreibungen sind z. B. in den WO 99/06524 und WO 99/04313; in Liquid Detergents, Editor: Kuo-Yann Lai, Surfactant Sci. Ser., Vol. 67, Marcel Decker, New York, 1997, p. 272-304, zu finden. Weitere detaillierte Beschreibungen der Wasch- und Reinigungsmittelinhaltsstoffe finden sich bspw. in: Handbook of Detergents, Part D: Formulation, Surfactant Sci Ser, Vol. 128, Editor: Michael S. Showell, CRC Press 2006; Liquid Detergents sec. Edition, Surfactant Sci Ser, Vol. 129, Editor: Kuo-Yann Lai, CRC Press 2006; oder Waschmittel: Chemie, Umwelt, Nachhaltigkeit, Günter Wagner, Wiley-VCH Verlag GmbH & Co. KGaA, August 2010.

Die nach dem hier beschriebenen erfindungsgemäßen Verfahren herstellbare bzw. hergestellte Polyasparaginsäure sehr gut als Calziumcarbonatbelagsinhibitor geeignet.

Die erfindungsgemäß herstellbaren Polyasparaginsäuren können als Belagsinhibitoren oder Dispergiermittel in wasserführenden Systemen verwendet werden. Wasserführende Systeme, in denen Polyasparaginsäuren, die nach dem erfindungsgemäßen Verfahren herstellbar sind, Verwendung finden können, sind prinzipiell alle Systeme, die permanent oder sporadisch in Kontakt mit Wasser wie Meerwasser, Brackwasser, Flusswasser, städtischen oder industriellen Abwässern oder industriellem Prozesswasser wie Kühlwasser in Kontakt kommen und in denen Belagsbildung auftreten kann.

Wasserführende Systeme, in denen die Polymere verwendet werden können, sind insbesondere Meerwasserentsalzungsanlagen, Brackwasserentsalzungsanlagen, Kühlwassersysteme und Kesselspeisewassersysteme, Dampfkessel, Erhitzer, Durchlauferhitzer, Heißwasserspeicher, Kühltürme, Kühlwasserkreisläufe und sonstige industrielle Prozesswässer. Die Entsalzungsanlagen können thermischer Natur sein oder auf Membranverfahren wie Umkehrosmose oder Elektrodialyse beruhen.

Im Allgemeinen werden die Polymere den wasserführenden Systemen in Mengen von 0,1 mg/l bis 100 mg/l zugegeben. Die optimale Dosierung richtet sich nach den Erfordernissen der jeweiligen Anwendung bzw. nach den Betriebsbedingungen des jeweiligen Verfahrens. So werden bei der thermischen Meerwasserentsalzung die Polymere bevorzugt in Konzentrationen von 0,5 mg/l bis 10 mg/l eingesetzt. In industriellen Kühlkreisläufen oder Kesselspeisewassersystemen finden Polymerkonzentrationen bis zu 100 mg/l Anwendung. Häufig werden Wasseranalysen durchgeführt, um den Anteil belagsbildender Salze und somit die optimale Dosierung zu ermitteln.

Den wasserführenden Systemen können auch Formulierungen zugegeben werden, die neben den erfindungsgemäßen Polymeren je nach Anforderung u.a. Phosphonate, Polyphosphate, Zinksalze, Molybdatsalze, organische Korrosionsinhibitoren wie Benzotriazol, Tolyltriazol, Benzimidazol oder Ethinylcarbinolalkoxylate, Biozide, Komplexbildner und/oder Tenside enthalten können. Beispiele für Phosponate sind 1-Hydroxyethan-1.1-diphosphonsäure (HEDP), 2-Phosphonobutan-1,2,4-tricarbonsäure (PBTC), Aminotrimethylenphosphonsäure (ATMP) Diethylentriaminpenta(methylen-phosphonsäure) (DTPMP) und Ethylendiamintetra(methylenphophonsäure) (EDTMP), die jeweils in Säureform oder in Form ihrer Natriumsalze verwendet werden.

Beispiele

Beispiel 1

Herstellung der Polyasparaginsäuren

Polymere 1-6 und V2:

In einem 2 l fassenden Reaktor mit Rührer und Temperaturmessfühler wurden 133,10 g L-Asparaginsäure, 30 g Wasser und die in der Tabelle 1 angegebene Menge Methansulfonsäure vorgelegt. Die Reaktionsmischung wurde bei leichtem Stickstoffstrom unter Rühren auf die Kondensationstemperatur von 210 °C bis 220 °C erhitzt und für 6 Stunden unter gleichzeitiger Abdestillation von Wasser bei dieser Temperatur kondensiert. Nach beendeter Reaktion wurde das entstandene Polyaspartimid zerkleinert und abgekühlt. Um die wässrige Natriumsalzlösung der Polyasparaginsäure herzustellen, dispergierte man 100 g des nach dem Kondensationsschritt entstandenen Polyaspartimids in 100 g Wasser, erwärmte die Mischung auf 70 °C und fügt bei dieser Temperatur so viel einer 50%igen wässrigen Natronlauge zu, so dass der pH-Wert im Bereich 7-9 lag. Dabei löste sich das in Wasser dispergierte Pulver allmählich auf und man erhielt eine klare wässrige Natriumsalzlösung der Polyasparaginsäure. Der Restgehalt an nicht umgesetzter Asparaginsäure wurde $^1$H-NMR spektroskopisch ermittelt. Er betrug < 0,5 Gew.% bezogen auf eingesetzte Asparaginsäure.

**Tabelle 1:** Polyasparaginsäuren

| Polymer | $MeSO_3H$ [g] | Molares Verhältnis L-Asp : $MeSO_3H$ | Mn [g/mol] | Mw [g/mol] | Mw/Mn |
|---|---|---|---|---|---|
| 1 | 2,4 | 40 : 1 | 2967 | 7323 | 2,5 |
| 2 | 4,81 | 20 : 1 | 3212 | 7713 | 2,4 |
| 3 | 7,21 | 13,3 : 1 | 4109 | 8492 | 2,1 |
| 4 | 9,61 | 10 : 1 | 4305 | 10630 | 2,5 |
| 5 | 12,01 | 8 : 1 | 4613 | 11430 | 2,5 |
| 6 | 13,9 | 6,9 : 1 | 4790 | 13750 | 2,5 |
| V2 | 38,4 | 2,5 : 1 | 5450 | 19110 | 3,5 |

Polymer V1:

In einem Rotationsverdampfer wurden 133.10 g L-Asparaginsäure für 2 h bei einer Temperatur von 210-220°C polykondensiert. Das resultierende Polyaspartimid wurde analog zu Polymer 1-6 bzw. V2 zu einer wässrigen Polyasparaginsäure-Natriumsalzlösung hydrolysiert. Das gewichtsmittlere Molekulargewicht Mw betrug 5400 g/mol.

**Beispiel 2**

**Bestimmung des Molekulargewichts (Mw und Mn)**

Das gewichtsmittlere bzw. zahlenmittlere Molekulargewicht (Mw bzw. Mn) der Beispiele wurde mit Hilfe von GPC (Gel-Permeations-Chromatographie) unter folgenden Bedingungen bestimmt:

| | |
|---|---|
| Säule | PSS SUPREMA analytical linear M<br>(Material: Polyhydroxymethacrylat Copolymer-Netzwerk Länge: 300 mm, Durchmesser 8 mm, Partikelgröße 10μ) |
| Elutionsmittel | 0,08 mol/l TRIS-Puffer pH = 7,0 in dest Wasser + 0,15 mol/l NaCl + 0,01 mol/l $NaN_3$ |
| Säulentemperatur | 35 °C |
| Durchflußgeschwindigkeit | 0.8 mL/min |
| Injektion | 100 μL |
| Konzentration | 1,5 mg/mL |

(fortgesetzt)

| | |
|---|---|
| Detektor | DRI Agilent 1100UV GAT-LCD 503 (260nm) |

Für die Molekulargewichtsbestimmung wurde eine kleine Menge des nach dem Polykondensationsschritt entstandenen Polyaspartimids entnommen und mehrmals mit Wasser gewaschen, um so die eingesetzte Methansulfonsäure zu entfernen. Das gewaschene Pulver wurde dann wie beschrieben mit Natronlauge hydrolysiert (d.h. man dispergierte das gewaschene Pulver in Wasser, erwärmte die Mischung auf 70 °C und fügte bei dieser Temperatur so viel einer 50%igen wässrigen Natronlauge zu, so dass der pH-Wert im Bereich 7-9 lag. Dabei löste sich das in Wasser dispergierte Pulver allmählich auf und man erhielt eine klare wässrige Natriumsalzlösung der Polyasparaginsäure). Probelösungen wurden über Sartorius Minisart RC 25 (0,2 μm) filtriert. Die Kalibrierung erfolgte mit eng verteilten Na-PAA-Standards der Fa. Polymer Standard Service mit Molekulargewichten von M = 1.250 g/mol bis M = 130500 g/mol. Zusätzlich wurde Na-Acrylat mit einem Molekulargewicht von M = 96 und ein PEG-Standard mit M = 620, der mit Na-PAA M = 150 gleichgesetzt wurde, benutzt. Die Werte außerhalb dieses Elutionsbereiches wurden extrapoliert. Die Auswertegrenze lag bei 122 g/mol.

**Beispiel 3**

**Calciumcarbonat-Inhibierungstest**

Eine Lösung aus $NaHC_3$, $MgSO_4$, $CaCl_2$ und Polymer wurde 2 h bei 70 °C im Wasserbad geschüttelt. Nach Filtration der noch warmen Lösung über einen 0,45 μm Milexfilter wurde der Ca-Gehalt des Filtrats komplexometrisch oder mittels einer $Ca^{2+}$-selektiven Elektrode ermittelt und durch Vergleich vorher / nachher die $CaCO_3$-Inhibierung in % ermittelt (siehe Formel 1).

| | |
|---|---|
| $Ca^{2+}$ | 215 mg/L |
| $Mg^{2+}$ | 43 mg/L |
| $HCO_3^-$ | 1220 mg/L |
| $Na^+$ | 460 mg/L |
| $Cl^-$ | 380 mg/L |
| $SO_4^{2-}$ | 170 mg/L |
| Polymer | 3 mg/L |
| Temperatur | 70 °C |
| Zeit | 2 Stunden |
| pH | 8,0-8,5 |

Formel 1

$CaCO_3$- Inhibierung (%) = [(mg ($Ca^{2+}$) nach 24 h – mg ($Ca^{2+}$) Blindwert nach 24 h) / (mg ($Ca^{2+}$) Nullwert – mg (Ca $^{2+}$) Blindwert nach 24 h)] x 100

**Tabelle 2**: $CaCO_3$-Inhibierung

| Beispiel | Inhibierung [%] |
|---|---|
| 2 | 61,2 |
| 4 | 59,2 |
| V2 | 43,9 |

**Beispiel 4**

**Geschirrspülmaschinentest**

Die Polymere wurden in der folgenden phosphatfreien Formulierung PF1 getestet.

**Tabelle 3:** Spülmittelprüfformulierung 1(PF1)

| Bestandteil | PF 1 |
|---|---|
| Protease | 2,5 |
| Amylase | 1,0 |
| Nichtionisches Tensid | 5 |
| Polymer | 10 |
| Natriumpercarbonat | 10,2 |
| Tetraacetylethylendiamin | 4 |
| Natriumdisilikat | 2 |
| Natriumcarbonat | 19,5 |
| Natriumcitrat-Dihydrat | 35 |
| Methylglycindiessigsäure, Na-Salz | 10 |
| Hydroxyethan-(1,1-diphosphonsäure) | 0,8 |

Angaben in Gew% bezogen auf die Gesamtmenge aller Komponenten
Dabei wurden folgende Versuchsbedingungen eingehalten:

| | |
|---|---|
| Geschirrspüler: | Miele G 1222 SCL |
| Programm: | 65 °C (mit Vorspülen) |
| Spülgut: | 3 Messer (Nickelchrommesser Karina, Solex Germany GmbH, D-75239 Eisingen)<br>3 Trinkgläser Amsterdam 0,2L<br>3 FRÜHSTÜCKSTELLER "OCEAN BLAU" (MELAMIN)<br>3 Porzellanteller: FAHNENTELLER FLACH 19 CM |
| Anordnung: | Messer in der Besteckschublade, Gläser im oberen Korb, Teller im unteren Korb einsortiert |
| Geschirrspülmittel: | 18 g |
| Schmutzzugabe: | 50 g Ballastschmutz wird aufgetaut mit der Formulierung nach dem Vorspülen dosiert, Zusammensetzung siehe unten |
| Klarspültemperatur: | 65 °C |
| Wasserhärte: | 21 °dH (Ca/Mg):HCO3 (3:1):1.35 |
| Spülzyklen: | 15; dazwischen jeweils 1 h Pause (10 min geschlossene Tür, 50 min geöffnete Tür) |
| Auswertung: | Visuell nach 15 Spülzyklen |

Die Bewertung des Spülguts erfolgte nach 15 Zyklen in einer abgedunkelten Kammer unter Licht hinter einer Lochblende unter Verwendung einer Notenskala von 10 (sehr gut) bis 1 (sehr schlecht). Vergeben wurden sowohl Noten von 1 - 10 für Spotting (sehr viele, intensive Spots = 1, bis keine Spots = 10) als auch für Belag (1 = sehr starker Belag, 10 = kein Belag)

Zusammensetzung des Ballastschmutzes:

| | |
|---|---|
| Stärke: | 0,5 % Kartoffelstärke, 2,5 % Bratensoße |
| Fett: | 10,2 % Margarine |
| Protein: | 5,1 % Eigelb, 5,1 % Milch |
| Andere: | 2,5 % Tomatenketchup, 2,5 % Senf, 0,1 % Benzoesäure, 71,5 % Wasser |

<u>Ergebnis:</u>

Die Formulierungen mit erfindungsgemäßer modifizierter Polyasparaginsäure zeichneten sich insbesondere durch ihre sehr hohe belagsinhibierende Wirkung gegenüber anorganischen und organischen Ablagerungen auf Glas und Messern aus. Weiterhin erhöhten sie die Reinigungskraft des Geschirrspülmittels und begünstigten das Ablaufen

des Wassers vom Spülgut, so dass besonders klare Gläser und glänzende Metallbesteckteile erhalten wurden.

In der nachfolgenden Tabelle 4 sind die addierten Noten für Belagsbildung (B) und Spotting (S) auf Messern und Trinkgläsern aufgeführt.

**Tabelle 4:** Testergebnisse Spülmittelprüfformulierung 1 (PF 1)

| Beispiel | Messer (B+S) | Gläser (B+S) |
|---|---|---|
| ohne Polymer | 7,3 | 7,2 |
| 2 | 16,3 | 15,3 |
| 4 | 13,0 | 14,0 |
| V1 | 11,4 | 9,0 |

## Patentansprüche

1. Verfahren zur Herstellung von Polyasparaginsäuren mit einem gewichtsmittleren Molekulargewicht (Mw) von 6.000 bis 15.000 g/mol, umfassend folgende Schritte:

   (i) Polykondensation von

   (a) Asparaginsäure in Gegenwart von
   (b) 1 bis 15 mol% Methansulfonsäure bezogen auf die in (a) eingesetzte Menge Asparaginsäure,

   bei einer Temperatur von 170 °C bis 230 °C für eine Zeit von 1 Minute bis 50 Stunden;
   (ii) anschließender Hydrolyse der Polykondensate unter Zugabe einer Base; und
   (iii) optional Ansäuern des in (ii) erhaltenen Salzes der Polyasparaginsäure mit Mineralsäuren oder sauren Ionenaustauschern.

2. Verfahren nach Anspruch 1, wobei in Schritt (i) (b) 2 bis 13 mol% Methansulfonsäure bezogen auf die in (a) eingesetzte Menge Asparaginsäure eingesetzt werden.

3. Verfahren nach Anspruch 1 oder 2, wobei in Schritt (i) (b) 3 bis 10 mol% Methansulfonsäure bezogen auf die in (a) eingesetzte Menge Asparaginsäure eingesetzt werden.

4. Verfahren nach einem der Ansprüche 1 bis 3, wobei die Polykondensation in Schritt (i) bei einer Temperatur von 190 °C bis 220 °C durchgeführt wird.

5. Verfahren nach einem der Ansprüche 1 bis 4, wobei der Quotient aus gewichtsmittlerem Molekulargewicht (Mw) zu zahlenmittlerem Molekulargewicht (Mn) der hergestellten Polyasparaginsäure nicht größer ist als 3.

6. Verfahren nach Anspruch 5, wobei der Quotient nicht größer ist als 2,5.

7. Verfahren nach einem der Ansprüche 1 bis 6, wobei die in Schritt (ii) verwendete Base ausgewählt ist aus der Gruppe bestehend aus Natronlauge, Kalilauge, Calciumhydroxid, Bariumhydroxid, Soda, Kaliumcarbonat, Ammoniak und Ammoniumhydroxid.

8. Verfahren nach einem der Ansprüche 1 bis 7, wobei die in Schritt (iii) verwendete Mineralsäure Schwefelsäure oder Salzsäure ist.

## Claims

1. A method for producing polyaspartic acids with a weight-average molecular weight (Mw) of 6000 to 15 000 g/mol, comprising the following steps:

   (i) polycondensation of

(a) aspartic acid in the presence of
(b) 1 to 15 mol% of methanesulfonic acid, based on the amount of aspartic acid used in (a)

at a temperature of 170°C to 230°C for a time period of 1 minute to 50 hours;
(ii) subsequent hydrolysis of the polycondensates with addition of a base; and
(iii) optional acidification of the salt of polyaspartic acid obtained in (ii) with mineral acids or acidic ion exchangers.

**2.** The method according to claim 1, wherein 2 to 13 mol% of methanesulfonic acid are used in step (i) (b), based on the amount of aspartic acid used in (a).

**3.** The method according to claim 1 or 2, wherein 3 to 10 mol% of methanesulfonic acid are used in step (i) (b), based on the amount of aspartic acid used in (a).

**4.** The method according to any of claims 1 to 3, wherein the polycondensation in step (i) is carried out at a temperature of 190°C to 220°C.

**5.** The method according to any of claims 1 to 4, wherein the quotient of weight-average molecular weight (Mw) to number-average molecular weight (Mn) of the polyaspartic acid produced is not greater than 3.

**6.** The method according to claim 5, wherein the quotient is not greater than 2.5.

**7.** The method according to any of claims 1 to 6, wherein the base used in step (ii) is selected from the group consisting of aqueous sodium hydroxide solution, aqueous potassium hydroxide solution, calcium hydroxide, barium hydroxide, sodium carbonate, potassium carbonate, ammonia and ammonium hydroxide.

**8.** The method according to any of claims 1 to 7, wherein the mineral acid used in step (iii) is sulfuric acid or hydrochloric acid.

## Revendications

**1.** Procédé de fabrication d'acides polyasparaginiques ayant un poids moléculaire moyen en poids (Mw) de 6 000 à 15 000 g/mol, comprenant les étapes suivantes :

(i) la polycondensation de

(a) de l'acide asparaginique en présence de
(b) 1 à 15 % en moles d'acide méthane-sulfonique par rapport à la quantité d'acide asparaginique utilisée en (a),

à une température de 170 °C à 230 °C pendant une durée de 1 minute à 50 heures ; puis
(ii) l'hydrolyse des polycondensats avec ajout d'une base; et
(iii) éventuellement l'acidification du sel de l'acide polyasparaginique obtenu en (ii) avec des acides minéraux ou des échangeurs d'ions acides.

**2.** Procédé selon la revendication 1, dans lequel, à l'étape (i) (b), 2 à 13 % en moles d'acide méthane-sulfonique est utilisé, par rapport à la quantité d'acide asparaginique utilisée en (a).

**3.** Procédé selon la revendication 1 ou 2, dans lequel, à l'étape (i)(b), 3 à 10 % en moles d'acide méthane-sulfonique est utilisé, par rapport à la quantité d'acide asparaginique utilisée en (a).

**4.** Procédé selon l'une quelconque des revendications 1 à 3, dans lequel la polycondensation à l'étape (i) est réalisée à une température de 190 °C à 220 °C.

**5.** Procédé selon l'une quelconque des revendications 1 à 4, dans lequel le quotient du poids moléculaire moyen en poids (Mw) et du poids moléculaire moyen en nombre (Mn) de l'acide polyasparaginique fabriqué n'est pas supérieur à 3.

6. Procédé selon la revendication 5, dans lequel le quotient n'est pas supérieur à 2,5.

7. Procédé selon l'une quelconque des revendications 1 à 6, dans lequel la base utilisée à l'étape (ii) est choisie dans le groupe constitué par l'hydroxyde de sodium, l'hydroxyde de potassium, l'hydroxyde de calcium, l'hydroxyde de baryum, la soude, le carbonate de potassium, l'ammoniac et l'hydroxyde d'ammonium.

8. Procédé selon l'une quelconque des revendications 1 à 7, dans lequel l'acide minéral utilisé à l'étape (iii) est l'acide sulfurique ou l'acide chlorhydrique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2011001170 A
- WO 2009095645 A
- WO 199610025 A
- US 5457176 A
- EP 0747417 A
- EP 1083194 A
- WO 199625450 A
- EP 851023 A
- DE 19819187 A
- US 5422028 A
- US 5294362 A
- US 5292447 A
- US 5039447 A
- JP 58217598 A
- WO 9013533 A
- WO 9507331 A
- US 3234258 A
- US 5075041 A
- WO 2009019225 A2
- EP 013836 A
- WO 2006016035 A
- WO 9906524 A
- WO 9904313 A


### In der Beschreibung aufgeführte Nicht-Patentliteratur


- **FOX et al.** Thermal polycondensation of alpha-amino acids. *Analytical Methods of Protein Chemistry,* 01. Januar 1966, 127-151
- Liquid Detergents. Surfactant Sci. Ser. Marcel Decker, 1997, vol. 67, 272-304
- Formulation, Surfactant Sci Ser. Handbook of Detergents. CRC Press, 2006, vol. 128
- Liquid Detergents sec. Surfactant Sci Ser. Wiley-VCH Verlag GmbH & Co. KGaA, August 2010, vol. 129